# EUROPÄISCHE PATENTANMELDUNG

(11) **EP 4 104 660 A1**
(43) Veröffentlichungstag der Anmeldung: **21.12.2022**
(21) Anmeldenummer: 22177527.3
(22) Anmeldetag: 07.06.2022
(51) Int. Cl.: A01C 7/20

(54) **SÄMASCHINE UND VERFAHREN ZUR EINSTELLUNG EINER SÄMASCHINE**

(30) Priorität: 15.06.2021 DE 102021115403
(71) Anmelder: Horsch Maschinen GmbH, 92421 Schwandorf (DE)
(72) Erfinder: Prüll, Thomas, 92421 Schwandorf (DE); Schulze, Florian, 92421 Schwandorf (DE)
(74) Vertreter: v. Bezold & Partner Patentanwälte - PartG mbB

(57) **Zusammenfassung**

Sämaschine (10) und Verfahren zu deren Einstellung, mit einer an einer Hauptrahmenkonstruktion (14) gelagerten und mittels einer Stelleinrichtung (210) in dessen Lage gegenüber einer Ackerfläche (100) veränderbare Scharmontagekonstruktion (20), sowie mit einer Sensoreinrichtung (220) zur Ermittlung einer verändernden Lage der Scharmontagekonstruktion und/oder daran gelagerter Säschare (50), und mit einer Steuereinrichtung (200), die eingerichtet ist, Stellsignale für die Stelleinrichtung bereitzustellen, wobei die Säschare (50) durch einen Scharrahmen (52), eine Schneidscheibe (54) und eine Druckrolle (56) gebildet sind, wobei der Aufstandspunkt (58) der Druckrolle in einer Feldarbeit einen vertikalen Abstand (VE) gegenüber einem zur Ackerfläche orientierten Scheitelpunkt (60) der Schneidscheibe aufweist, wobei der vertikale Abstand (VE) durch eine Lageänderung der Scharmontagekonstruktion veränderbar ist. Nach der Erfindung ist die Steuereinrichtung eingerichtet, basierend auf der mittels der Sensoreinrichtung ermittelten Lage sowie einer Sollvorgabe des vertikalen Abstand (VE) Stellsignale für die Stelleinrichtung derartig bereitzustellen, dass der vertikale Abstand (VE) dauerhaft zumindest weitgehend konstant gehalten wird.

## Beschreibung

Die Erfindung betrifft eine Sämaschine zur Ablage von landwirtschaftlichem Verteilgut auf einer Ackerfläche. Die Erfindung betrifft zudem ein Verfahren zur Einstellung einer Sämaschine zur Ablage von landwirtschaftlichem Verteilgut auf einer Ackerfläche.

Sämaschinen dienen in der Landwirtschaft zur Verteilung und Ablage von landwirtschaftlichen Verteilgütern, wie bspw. Saatgütern, auf landwirtschaftlichen Ackerflächen. Die Verteilung und Ablage der jeweiligen Verteilgüter erfolgt mittels an den Sämaschinen angebauter Säschare. Um gute und gleichmäßige Wachstumsbedingungen für die Saatgüter zu erreichen, sind die Säschare eingerichtet, die Saatgüter in einer definierbaren Ablagetiefe abzulegen. Zur konstanten Einhaltung der Ablagetiefe sind aus dem Stand der Technik bereits verschiedenste Regelungssysteme bekannt.

Eine Sämaschine mit einem Regelungssystem für die Arbeitstiefe der Säschare beschreibt bspw. die EP 3 501 248 A1. Offenbart ist hierbei ein Regelungssystem für Säschare, wobei wenigstens zwei derartige Säschare jeweils mittels elastischer Lagerelemente schwenkbar an einem Träger montiert sind, welcher Träger mittels eines Aktors schwenkbar an einem Lagerflansch oder einem Rahmenelement einer landwirtschaftlichen Maschine montiert oder angebaut wird, wobei mittels des Aktors die jeweilige Winkelposition des Trägers in Bezug auf die Ackerfläche veränderbar ist, wodurch der Auflagedruck und/oder die Arbeitstiefe der Säschare veränderbar ist. Zur Messung des Auflagedrucks und/oder der Arbeitstiefe ist zumindest einem Arbeitswerkzeug und/oder dem Träger ein Messmittel zugeordnet.

Mit dem somit bekannten Regelungssystem kann eine Einhaltung der Ablagetiefe wesentlich verbessert werden, jedoch ist das System nur bedingt geeignet die Ablagetiefe bei häufig wechselnden Bodenbedingungen exakt einzuhalten, da die, die Ablagetiefe definierende Lage der Druckrolle gegenüber der Saatfurche nicht als Regelgröße berücksichtigt wird.

Aufgabe der Erfindung ist somit, eine Sämaschine und ein Verfahren zu schaffen, mittels denen eine Ablagetiefe von Verteilgütern auch bei sich verändernden Bodeneigenschaften dauerhaft exakt konstant gehalten werden kann.

Diese Aufgaben werden gelöst durch eine Sämaschine mit den Merkmalen des unabhängigen Anspruch 1 sowie durch ein Verfahren mit den Merkmalen des Verfahrensanspruch 14. Vorteilhafte Ausführungsformen und Weiterbildungen der Erfindung sind in den Ansprüchen und der folgenden Beschreibung unter teilweiser Bezugnahme auf die Figuren offenbart.

Ein erster allgemeiner Gesichtspunkt der Erfindung betrifft eine Sämaschine zur Ablage von landwirtschaftlichem Verteilgut (z.B. Saatgut, Dünger oder dergl.) auf einer Ackerfläche. Wobei die Ackerfläche bspw. unterschiedliche Bodeneigenschaften aufweisen kann, das heißt sandig, lehmartig, trocken, feucht, klutenartig und/oder dergl. sein kann.

Die Sämaschine weist zumindest eine Hauptrahmenkonstruktion und eine an dieser gelagerte Packerwalze auf.

Die Sämaschine weist zumindest eine an der Hauptrahmenkonstruktion gelagerte und mittels einer Stelleinrichtung in dessen Lage gegenüber der Ackerfläche veränderbare Scharmontagekonstruktion auf, wobei die Stelleinrichtung eingerichtet ist, basierend auf Stellsignalen Stellbewegungen (z.B. Verfahrbewegungen, Hubbewegungen) zur Lageänderung der Scharmontagekonstruktion auszuführen.

Die Sämaschine weist zudem zumindest eine Sensoreinrichtung auf, die eingerichtet ist, eine sich verändernde Lage der Scharmontagekonstruktion und/oder der Säschare gegenüber der Ackerfläche mittelbar oder unmittelbar zu ermitteln. Zudem weist die Sämaschine zumindest eine Steuereinrichtung auf, die eingerichtet ist, Stellsignale für die Stelleinrichtung bereitzustellen.

Zum Ablegen des Verteilgut auf der Ackerfläche weist die Sämaschine mehrere an der Scharmontagekonstruktion gelagerte Säschare auf, welche Säschare jeweils zumindest durch einen Scharrahmen, eine Schneidscheibe, die ausgelegt ist, eine Saatfurche in einer Ackerfläche zu erzeugen und eine Druckrolle, die in Vortriebsrichtung der Schneidscheibe nachgeordnet und ausgelegt ist mit Druck entlang der Ackerfläche abzurollen, gebildet sind. Wobei der Aufstandspunkt (tiefster in Richtung der Ackerfläche orientierter Punkt) der Druckrolle in einer Feldarbeit (das heißt wenn sich die Schneidscheibe und/oder die Druckrolle in Bodenkontakt mit der Ackerfläche befinden) einen vertikalen Abstand gegenüber einer horizontalen Ebene, die parallel zur Vortriebsrichtung der Säschare orientiert ist und die tangential zu einem in Richtung der Ackerfläche orientieren Scheitelpunkt der Schneidscheibe ist, aufweist und die Säschare derartig an der Scharmontagekonstruktion gelagert sind, dass der vertikale Abstand durch eine Lageänderung der Scharmontagekonstruktion veränderbar ist.

Um ein Sämaschine zu schaffen mittels der eine Ablagetiefe von Verteilgütern auch bei sich verändernden Bodeneigenschaften dauerhaft exakt konstant gehalten werden kann ist erfindungsgemäß vorgesehen, dass die Steuereinrichtung eingerichtet ist, basierend auf der mittels der Sensoreinrichtung ermittelten Lage der Scharmontagekonstruktion und/oder der Säschare sowie einer Sollvorgabe des vertikalen Abstand Stellsignale für die Stelleinrichtung zur Lageänderung der Scharmontagekonstruktion derartig bereitzustellen, dass der vertikale Abstand dauerhaft zumindest weitgehend konstant gehalten wird.

Infolge der Erfindungsgemäßen Maßnahmen wird somit erreicht, dass ein die Ablagetiefe beeinflussender und definierender vertikaler Abstand der Druckrolle gegenüber der Schneidscheibe dauerhaft zumindest weitgehend konstant gehalten werden kann und nicht wie bisher bspw. nur eine auf die Druckrolle wirkende Kraft konstant gehalten wird. Erfindungsgemäß haben somit verschiedene Bodenbedingungen nur noch einen geringen Einfluss auf die Arbeitstiefe, da äußere Einflüsse, wie bspw. ein Versinken der Packerwalze bei sandigen Böden, durch die Betrachtung des vertikalen Abstand nur noch indirekt mit berücksichtigt werden müssen.

Mittels der Erfindung kann somit durch ein dauerhaftes zumindest weitgehendes konstant halten des vertikalen Abstand eine Ablagetiefe des Verteilgut mittels der Säschare gegenüber dem Stand der Technik wesentlich exakter eingehalten werden.

Eine bevorzugte Ausführungsvariante der Erfindung kann vorsehen, dass der Scharrahmen und die Schneidscheibe in fixierter Position zueinander an der Scharmontagekonstruktion schwenkbar gelagert sind. Wobei durch die fixierte Position eine Einhaltung des vertikalen Abstands vereinfacht wird. Auch ist es möglich, dass die Druckrolle in fixierter und/oder fixierbarer (z.B. verstellbarer) Position oder höhenbeweglich (z.B. frei beweglich durch Lagerstelle, Gummischnurlagerung und/oder dergl.) am Scharrahmen gelagert ist.

Eine bevorzugte Anordnung der Druckrolle ergibt sich zweckmäßig, in dem die Druckrolle in Vortriebsrichtung mit vollem Umfang der Schneidscheibe, das heißt der zumindest einen Schneidscheibe, nachgeordnet ist.

Es sei darauf hingewiesen, dass auch wenn im vorliegenden definiert ist, dass die Sensoreinrichtung eingerichtet ist eine Lage von einer Mehrzahl von Säscharen zu erfassen, hiervon auch Ausführungsvarianten mit umfasst sind, in denen bspw. nur einem Säschar ein Sensor zugeordnet ist, die Daten des Sensors jedoch für mehrere Säschare herangezogen werden können.

Es sei zudem darauf hingewiesen, dass die Definition, dass die Sensoreinrichtung eingerichtet ist eine Lage der Scharmontagekonstruktion und/oder der Säschare gegenüber der Ackerfläche zu ermitteln, sich darauf bezieht, dass eine Lageänderung in der Regel immer eine Änderung der Lage gegenüber der Ackerfläche hervorruft. Somit sind auch Ausführungsvarianten nicht ausgeschlossen, bei denen als Bezugsgröße bzw. Bezugspunkt für den oder die, die Sensoreinrichtung bildenden Sensor(en) nicht zwingend die Ackerfläche dienen muss sondern auch bspw. die Hauptrahmenkonstruktion oder die Scharmontagekonstruktion oder eine Lage im Raum oder dergl. dienen kann.

Die Sensoreinrichtung ist vorzugsweise zur mittelbaren Ermittlung der sich verändernden Lage der Scharmontagekonstruktion und/oder der Säschare eingerichtet, wobei hierfür vorzugsweise vorgesehen sein kann, dass die Sensoreinrichtung eingerichtet ist, eine Lage der Scharmontagekonstruktion gegenüber der Ackerfläche und/oder der Hauptrahmenkonstruktion zu erfassen und/oder eine Lage zumindest eines Säschares gegenüber der Ackerfläche und/oder der Scharmontagekonstruktion zu erfassen und/oder eine Lage der Hauptrahmenkonstruktion gegenüber der Ackerfläche zu erfassen.

Zur mittelbaren Ermittlung der sich verändernden Lage der Scharmontagekonstruktion und/oder der Säschare wäre es auch möglich, dass die Sensoreinrichtung eingerichtet ist, eine auf die Druckrolle und/oder die Schneidscheibe und/oder den Scharrahmen und/oder die Scharmontagekonstruktion wirkende Kraft zu erfassen.

Die Sensoreinrichtung ist alternativ oder ergänzend zur unmittelbaren Ermittlung der sich verändernden Lage der Scharmontagekonstruktion und/oder der Säschare eingerichtet, wobei hierfür vorzugsweise vorgesehen sein kann, dass die Sensoreinrichtung eingerichtet ist, eine Lage der Druckrolle gegenüber der Schneidscheibe zu erfassen, und/oder eine Lage des Aufstandspunkt der Druckrolle gegenüber dem zur Ackerfläche orientierten Scheitelpunkt der Schneidscheibe zu erfassen und/oder eine Lage des Aufstandspunkt der Druckrolle gegenüber der horizontalen Ebene, die parallel zur Vortriebsrichtung der Säschare orientiert ist und die tangential zu einem in Richtung der Ackerfläche orientieren Scheitelpunkt der Schneidscheibe ist, zu erfassen.

Vorzugsweise ist die Sensoreinrichtung eingerichtet, zur mittelbaren Ermittlung der sich verändernden Lage der Scharmontagekonstruktion und/oder der Säschare, eine Höhenlage und/oder Winkellage und/oder Lage in Vortriebsrichtung der Scharmontagekonstruktion gegenüber der Hauptrahmenkonstruktion und/oder der Ackerfläche zu ermitteln. Somit kann auf Basis einer sich verändernden Lage der Scharmontagekonstruktion auf eine sich verändernden vertikalen Abstand rückgeschlossen werden und die Lage bspw. mittels der Stelleinrichtung entsprechend angepasst, bzw. verändert werden.

Erfindungsgemäß kann zweckmäßig basierend auf einer sich verändernden Lage der Scharmontagekonstruktion und/oder des Säschares mittels der Steuereinrichtung, vorzugsweise mittels eines in der Steuereinrichtung hinterlegten Steuerprogramm, definiert werden, ob der vertikale Abstand dauerhaft zumindest weitgehend konstant gehalten wird und entsprechend falls erforderlich die Stelleinrichtung derartig mittels der Stellsignale angesteuert werden um die Lage der Scharmontagekonstruktion und/oder des Säschares derartig zu verändern, dass der vertikale Abstand dauerhaft zumindest weitgehend konstant gehalten wird.

Die Sensoreinrichtung wird zweckmäßig durch zumindest einen Sensor (z.B. Abstandssensor, Lagesensor, Beschleunigungssensor, Neigungssensor) gebildet, der eingerichtet ist, eine Lage der Hauptrahmenkonstruktion (z.B. gegenüber der Ackerfläche oder im Raum) zu ermitteln und durch zumindest einen weiteren Sensor (z.B. Abstandssensor, Winkelsensor) gebildet, der eingerichtet ist, eine Lage (z.B. Winkellage) von zumindest einem Säschar gegenüber der Scharmontagekonstruktion und/oder gegenüber der Hauptrahmenkonstruktion zu ermitteln. Wobei zudem zumindest ein weiterer Sensor (z.B. Abstandsensor, Winkelsensor) vorgesehen sein kann, der eingerichtet ist, eine Lage der Scharmontagekonstruktion gegenüber der Hauptrahmenkonstruktion zu ermitteln.

Die Packerwalze ist bspw. durch eine Mehrzahl von quer zur Vortriebsrichtung in regelmäßigen Abständen zueinander angeordnete Packerelemente (z.B. Räder, Stahlringen) gebildet, wobei die Sensoreinrichtung zur mittelbaren Ermittlung der Lage der Scharmontagekonstruktion und/oder der Säschare eingerichtet sein kann, einen Höhenabstand der Hauptrahmenkonstruktion gegenüber der Ackerfläche zwischen zwei Packerelementen zu erfassen und/oder in Vortriebsrichtung unmittelbar vor oder hinter der Packerwalze zu erfassen. Somit kann insbesondere auf ein mögliches Versinken der Packerwalze bei sich verändernden Bodenbedingungen reagiert werden.

Es ist möglich, dass den Packerelementen vorzugsweise jeweils eine identische Anzahl (z.B. ein, zwei oder mehr Säschare) an Säschare nachgeordnet sind.

Zur Verbesserung der Erfassung des vertikalen Abstands kann alternativ oder ergänzend vorgesehen sein, dass die Steuereinrichtung eingerichtet ist, Stellsignale für die Stelleinrichtung unter Berücksichtigung geometrischer Größen (z.B. Maße des Scharrahmen, Durchmesser der Scharscheibe und der Druckrolle, Position der Druckrolle zur Scharscheibe, oder dergl.) der Scharmontagekonstruktion und/oder des Säschares bereitzustellen. Somit kann basierend auf einer sich verändernden Lage der Scharmontagekonstruktion und/oder des Säschares sowie der geometrischen Größen bspw. mittels eines in der Steuereinrichtung hinterlegten Steuerprogramm ein vertikaler Abstand berechnet werden.

Es ist möglich, dass die Säschare unmittelbar an der Scharmontagekonstruktion schwenkbar gelagert sind, wobei die Scharmontagekonstruktion zur unmittelbaren Lagerung einen Träger aufweist an welchem der Scharrahmen drehbar gelagert ist. Der Scharrahmen kann somit bspw. eine Schwinge bilden.

Es ist möglich, dass die Säschare mittelbar an der Scharmontagekonstruktion schwenkbar gelagert sind, wobei die Scharmontagekonstruktion zur mittelbaren Lagerung eine Parallelogrammlagerung aufweist an welcher der Scharrahmen beweglich gelagert ist.

Eine Weiterbildung der Erfindung kann vorsehen, dass die Steuereinrichtung eingerichtet ist, Stellsignale für die Stelleinrichtung zur Lageänderung der Scharmontagekonstruktion derartig bereitzustellen, dass für ein dauerhaftes zumindest weitgehendes konstant halten des vertikalen Abstands (VE) der Druck (z.B. Kraft) mit welchem die Druckrolle entlang der Ackerfläche bewegt wird erhöht, verringert oder im Wesentlichen konstant gehalten wird. Das heißt, dass eine auf die Druckrolle wirkende Kraft derartig angepasst werden kann, dass der vertikale Abstand eingehalten wird.

Eine Weiterbildung der Erfindung kann vorsehen, dass die Steuereinrichtung eingerichtet ist, Stellsignale für die Stelleinrichtung zur Lageänderung der Scharmontagekonstruktion derartig bereitzustellen, dass für ein dauerhaftes zumindest weitgehendes konstant halten des vertikalen Abstands, eine Höhenlage und/oder Winkellage und/oder Lage in Vortriebsrichtung der Scharmontagekonstruktion gegenüber der Hauptrahmenkonstruktion und/oder der Ackerfläche verändert oder im Wesentlichen konstant gehalten wird.

Es ist somit bspw. möglich, dass bspw. eine Höhenlage und/oder eine Winkellage eines Trägers der Scharmontagekonstruktion verändert wird, vorzugsweise mittels der Stelleinrichtung verändert wird und/oder dass die Lage (z.B. die Lage der Lagerstellen) in Vortriebsrichtung und/oder die Winkellage und/oder die Höhenlage der Parallelogrammlagerung verändert werden, vorzugsweise mittels der Stelleinrichtung verändert werden.

Vorzugsweise ist es möglich, dass die Steuereinrichtung und/oder die Sensoreinrichtung eingerichtet ist, aus Signalen der die Sensoreinrichtung bildenden Sensoren, jeweils einen Mittelwert zu bilden, und basierend auf dem Mittelwert eine Lage der Scharmontagekonstruktion und/oder der Säschare zu ermitteln. Hierfür kann in der Steuereinrichtung und/oder in der Sensoreinrichtung ein Auswerteprogramm oder eine Auswerteschaltung vorgesehen sein, die eingerichtet ist, die Signale der die Sensoreinrichtung bildenden Sensoren derartig zu verarbeiten, dass deren Ausgangssignale jeweils zu einem Mittelwert verrechnet werden, das heißt Extremwerte (z.B. hervorgerufen durch Kluten, Steine oder dergl.) werden somit nicht berücksichtigt. Somit ist ein ruhiger Lauf der Säschare entlang der Ackerfläche gewährleistet, da nicht dauerhaft durch die Stelleinrichtung die Lage der Scharmontagekonstruktion beeinflusst wird.

Es ist möglich, dass die Säschare quer zur Vortriebsrichtung gestaffelt angeordnet sind und zumindest Säschare mit zwei unterschiedlichen Längen an der Scharmontagekonstruktion gelagert sind, wobei die Steuereinrichtung eingerichtet sein kann, Stellsignale für die Stelleinrichtung zur Lageänderung der Scharmontagekonstruktion derartig bereitzustellen, dass der vertikale Abstand des kurzen Säschares und/oder des langen Säschares dauerhaft zumindest weitgehend konstant gehalten wird und/oder dass ein Mittelwert des vertikalen Abstand des kurzen Säschares und des langen Säschares dauerhaft zumindest weitgehend konstant gehalten wird.

Eine Weiterbildung der Erfindung kann vorsehen, dass die Steuereinrichtung eingerichtet ist, basierend auf einer Sollvorgabe des vertikalen Abstand eine, eine diesem entsprechende Lage der Scharmontagekonstruktion und/oder der Säschare zu definieren und/oder diesem entsprechende, mittels der Sensoreinrichtung erfasste, Lagesignale zu definieren und Stellsignale für die Stelleinrichtung zur Lageänderung der Scharmontagekonstruktion derartig bereitzustellen, dass die Lage der Scharmontagekonstruktion und/oder der Säschare und/oder die mittels der Sensoreinrichtung erfassten Lagesignale, insbesondere gegenüber der Hauptrahmenkonstruktion und/oder der Ackerfläche, dauerhaft zumindest weitgehend konstant gehalten werden.

Die Vortriebsrichtung entspricht insbesondere einer Fahrtrichtung, das heißt einer Bewegungsrichtung mit der die Sämaschine während des Ausbringen des Verteilgut entlang der Ackerfläche bewegt wird.

Gemäß einer Weiterbildung der Erfindung ist es möglich, dass die Sämaschine zumindest zwei Scharmontagekonstruktionen mit jeweils zumindest einer Stelleinrichtung umfasst, wobei es möglich ist, dass jeweils eine unterschiedliche und/oder identische Anzahl an daran gelagerten Säscharen mit jeweils identischen und/oder unterschiedliche vertikalen Abständen angebracht sind, wobei zudem auch eine entsprechende Anzahl an Sensoreinrichtungen vorgesehen sein kann. Wobei es zudem möglich ist, dass die Steuereinrichtung eingerichtet ist, basierend auf der jeweils mittels der Sensoreinrichtung ermittelten Lage der jeweiligen Scharmontagekonstruktion und/oder der jeweiligen Säschare sowie einer jeweiligen Sollvorgabe des vertikalen Abstand Stellsignale für die jeweilige Stelleinrichtung zur Lageänderung der Scharmontagekonstruktion derartig bereitzustellen, dass der jeweilige vertikale Abstand dauerhaft zumindest weitgehend konstant gehalten wird.

Wobei es auch denkbar ist, dass einzelne Sensoren zwei oder mehr Sensoreinrichtungen wirktechnisch zugeordnet sind. Ebenso ist es möglich, dass in Abhängigkeit der Anzahl an Säscharen Stelleinrichtungen (z.B. Hydraulikzylinder) mit unterschiedlichen Querschnitten (z.B. Kolbendurchmessern) und/oder unterschiedlichen Anzahlen (z.B. ein, zwei oder mehr Hydraulikzylinder) eingesetzt werden.

Es sei darauf hingewiesen, dass die Säschare bspw. ein Schneidscheibe oder zwei Schneidscheiben, die bspw. in einem Winkel zueinander angeordnet sind, aufweisen können und dementsprechend bspw. ein sog. Einscheibenschar oder Doppelscheibenschar bilden können. Auch wenn im vorliegenden eine Schneidscheibe definiert ist, sind dementsprechend hiervon auch Säschare mit zwei Schneidscheiben, das heißt Doppelscheibenschare umfasst.

Zur Lageänderung der Scharmontagekonstruktion kann die Stelleinrichtung mit der Scharmontagekonstruktion mit einem Verstellmechanismus verbunden werden.

Gemäß einer Weiterbildung der Erfindung ist es denkbar, dass die Sensoreinrichtung zumindest eine erste Sensoreinheit (z.B. gebildet durch einen oder mehrere Sensoren) aufweist, die die dazu eingerichtet ist, mittelbar oder unmittelbar eine Winkellage und/oder Höhenlage der Scharmontagekonstruktion und/oder des Säschares gegenüber der Ackerfläche zu erfassen. Zudem ist es möglich, dass die Sensoreinrichtung eine zweite Sensoreinheit (z.B. gebildet durch einen oder mehrere Sensoren) aufweist, die dazu eingerichtet ist, mittelbar oder unmittelbar eine Lage eines Referenzbauteiles (z.B. die Hauptrahmenkonstruktion) gegenüber der Ackerfläche zu erfassen und/oder eine Winkellage des Referenzbauteils (z.B. die Hauptrahmenkonstruktion) im Raum (z.B. Lage des Referenzbauteils gegenüber der Ackerfläche und/oder gegenüber bspw. der Erdbeschleunigung) zu erfassen. Wobei die Steuereinrichtung zweckmäßig eingerichtet ist, basierend auf der mittels der Sensoreinrichtung (d.h. mittels der ersten Sensoreinheit und der zweiten Sensoreinheit) ermittelten Lage der Scharmontagekonstruktion und/oder der Säschare sowie einer Sollvorgabe des vertikalen Abstand Stellsignale für die Stelleinrichtung zur Lageänderung der Scharmontagekonstruktion derartig bereitzustellen, dass der vertikale Abstand dauerhaft zumindest weitgehend konstant gehalten wird. Wobei wiederum die Sollvorgaben in der Steuereinrichtung hinterlegt und/oder eingegeben werden können.

Die Steuereinrichtung weist bspw. eine Rechnereinheit, einen Bordcomputer und/oder dergl. auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Im Kontext der Erfindung umfasst der Begriff der Steuereinrichtung, insbesondere die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren oder Sensoreinrichtungen integrierte Steuereinrichtungen. Ebenso sei darauf hingewiesen, dass die Signale und/oder Daten der Sensoren und/oder der Sensoreinrichtungen jeweils als Rückkoppelung für eine Steuer- und/oder Regelgröße herangezogen werden können.

Es sei noch darauf hingewiesen, dass die Begriffe "Steuern" und "Steuereinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Zur Vermeidung von Wiederholungen sollen rein vorrichtungsgemäß offenbarte Merkmale auch als verfahrensgemäß offenbart gelten und beanspruchbar sein und umgekehrt. Die vorgenannten Aspekte und erfindungsgemäßen Merkmale, insbesondere im Hinblick auf die Ausbildung der Sämaschine gelten somit auch im Zusammenhang mit dem offenbarten Verfahren. In umgekehrter Weise gilt das gleiche, so dass auch alle Merkmale im Zusammenhang mit dem Verfahren auch für die Sämaschine offenbart sind.

Die Erfindung umfasst zur Lösung der Aufgaben zudem ein Verfahren zur Einstellung einer Sämaschine zur Ablage von landwirtschaftlichem Verteilgut auf einer Ackerfläche.

Das Verfahren umfasst ein Bewegen von Säscharen entlang einer Ackerfläche, wobei die Säschare an einer Scharmontagekonstruktion gelagert sind und die Säschare zumindest einen Scharrahmen, eine Schneidscheibe und eine Druckrolle aufweisen und wobei eine Lage der Scharmontagekonstruktion mittels einer Stelleinrichtung veränderbar ist, welche Stelleinrichtung eingerichtet ist, basierend auf Stellsignalen Stellbewegungen (z.B. Verfahrbewegungen, Hubbewegungen) auszuführen.

Zudem umfasst das Verfahren ein Erzeugen einer Saatfurche in der Ackerfläche mittels der zumindest einen Schneidscheibe und ein Ablegen des Verteilgut in die Saatfurche, sowie anschließendes Andrücken des Verteilgut in der Saatfurche und/oder schließen der Saatfurche mittels der Druckrolle, wobei die Druckrolle sich mit Druck entlang der Ackerfläche abrollt und in einem vertikalen Abstand gegenüber einer horizontalen Ebene, die parallel zur Vortriebsrichtung der Säschare orientiert ist und die tangential zu einem in Richtung der Ackerfläche orientieren Scheitelpunkt der Schneidscheibe ist, angeordnet ist.

Das Verfahren ist gekennzeichnet durch eine Kalibrierungsphase (z.B. Einstellphase) zur direkten und/oder indirekten Definition einer Sollvorgabe des vertikalen Abstand und eine Bereitstellung von Stellsignalen für die Stelleinrichtung zur Lageänderung der Scharmontagekonstruktion mittels einer Steuereinrichtung basierend auf einer mittels einer Sensoreinrichtung ermittelten Lage der Scharmontagekonstruktion und/oder der Säschare sowie der Sollvorgabe des vertikalen Abstand (VE) derartig, dass der vertikale Abstand dauerhaft zumindest weitgehend konstant gehalten wird.

Gemäß einer Weiterbildung des erfindungsgemäßen Verfahren kann vorgesehen sein, dass die Steuereinrichtung eingerichtet ist, in der Kalibrierungsphase basierend auf einer Sollvorgabe des vertikalen Abstand eine, eine diesem entsprechende Lage der Scharmontagekonstruktion und/oder der Säschare zu definieren und/oder diesem entsprechende, mittels der Sensoreinrichtung erfasste, Lagesignale zu definieren und Stellsignale für die Stelleinrichtung zur Lageänderung der Scharmontagekonstruktion derartig bereitzustellen, dass die Lage der Scharmontagekonstruktion und/oder der Säschare und/oder die mittels der Sensoreinrichtung erfassten Lagesignale, insbesondere gegenüber der Hauptrahmenkonstruktion und/oder der Ackerfläche, dauerhaft zumindest weitgehend konstant gehalten werden.

Vorzugsweise kann vorgesehen sein, dass die Kalibrierungsphase zur direkten Definition einer Sollvorgabe des vertikalen Abstands eine Nutzereingabe eines vertikalen Abstands in die Steuereinrichtung umfasst, somit kann bspw. ein definierter ein Wert (z.B. Maßangabe) des vertikalen Abstands direkt vorgegeben werden. Alternativ oder ergänzend hierzu kann vorgesehen sein, dass die Kalibrierungsphase zur indirekten Definition einer Sollvorgabe des vertikalen Abstands, eine derartige Lageänderung der Scharmontagekonstruktion und/oder der Säschare umfasst, dass ein gewünschte Ablagetiefe erreicht wird. Somit kann bspw. durch eine Bedienperson eine Lage der Scharmontagekonstruktion und/oder der Säschare solange verändert werden, bis eine gewünschte Ablagetiefe erreicht wird, der sich durch die Ablagetiefe einstellende vertikale Abstand bzw. die den vertikalen Abstand definierende Lage der Scharmontagekonstruktion und/oder der Säschare kann wiederum als Sollvorgabe übernommen werden.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine Perspektivansicht einer Ausführungsvariante einer Sämaschine,
- Figur 2A und 2B: Perspektivansichten einer vereinfachten Darstellung einer Sämaschine mit einer Mehrzahl von unmittelbar an der Scharmontagekonstruktion gelagerten Säscharen,
- Figuren 2C bis 2F: Seitenansichten im Detail einer Sämaschine und eines Säschares gemäß der Figur 2A mit unterschiedlichen vertikalen Abständen,
- Figur 3A und 3B: Perspektivansichten einer vereinfachten Darstellung einer Sämaschine mit einer Mehrzahl von mittelbar mittels Parallelogrammlagerung gelagerten Säscharen,
- Figuren 3C bis 3F: Seitenansichten im Detail einer Sämaschine und eines Säschares gemäß der Figur 3A mit unterschiedlichen vertikalen Abständen.

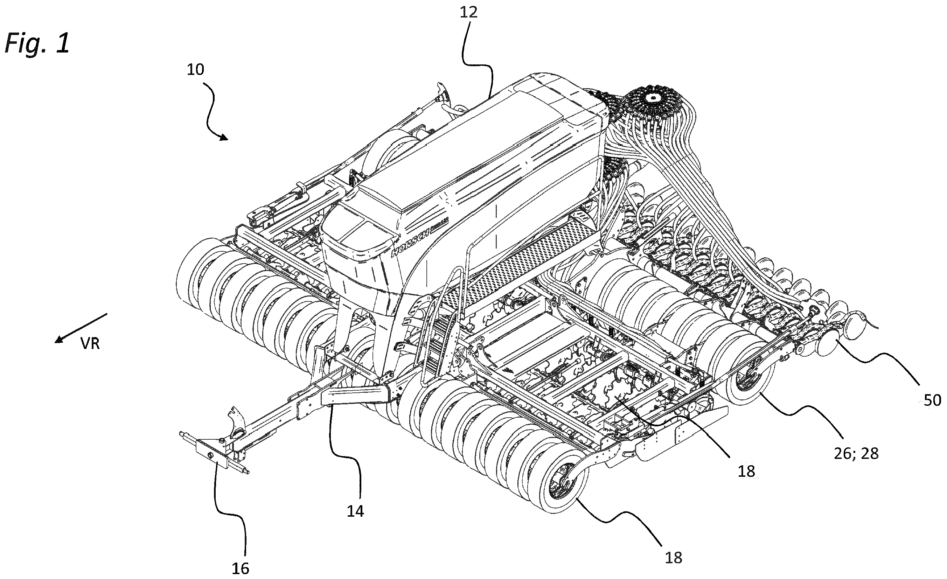

Die in den Figuren 1 bis 3 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie die erfindungsgemäße Sämaschine und das erfindungsgemäße Verfahren ausgestaltet und ausgeführt sein können und stellen keine abschließende Begrenzung dar.

Eine Ausführungsvariante einer Sämaschine 10 mit einer Mehrzahl an Säscharen 50 geht aus der Perspektivansicht der Figur 1 hervor. Die Sämaschine 10 dient zur Ablage, das heißt zur Verteilung, von landwirtschaftlichem Verteilgut auf einer Ackerfläche 100. Die Sämaschine 10 ist vorzugsweise eingerichtet ein Verfahren wie in diesem Dokument beschrieben auszuführen, insbesondere ein Verfahren nach Verfahrensanspruch 14 auszuführen.

Die Sämaschine 10 umfasst einen Vorratsbehälter 12 zum Mitführen und Bereitstellen des landwirtschaftlichen Verteilgut (z.B. Saatgut, Dünger und/oder dergl.) und ein mit dem Vorratsbehälter 12 wirkverbundenes, vorzugsweise pneumatisches, Leitungs- und Verteilsystem zum Transportieren des Verteilgut zu den Säscharen 50. Wobei die Säschare entlang der Ackerfläche 100 bewegt werden, hierbei eine Saatfurche erzeugen und anschließend ein Ablegen des Verteilgut in die mittels der Säschare 50 in der Ackerfläche 100 erzeugten Saatfurchen erfolgt.

Es sei darauf hingewiesen, dass die Ablage des Verteilgut in die Saatfurche vor der Druckrolle 56 erfolgt, das heißt zwischen der Schneidscheibe 54 und der Druckrolle 56 erfolgt. So dass anschließend nach der Ablage des Verteilgut in die Saatfurche mittels der Druckrolle 56 ein Andrücken des Verteilgut in der Saatfurche und/oder ein Schließen der Saatfurche erfolgt, wobei die Druckrolle 56 sich hierfür zweckmäßig mit Druck entlang der Ackerfläche 100 abrollt.

Zur Ablage des Verteilgut, ist zweckmäßig zwischen der Schneidscheibe 54 und der Druckrolle 56 eine Saatgutleitung angeordnet.

Die Sämaschine umfasst eine Hauptrahmenkonstruktion 14, welcher im vorderen Bereich eine Verbindungseinrichtung 16, zur Verbindung mit einem hier nicht dargestellten Zugfahrzeug (z.B. Traktor) zugeordnet ist. Die Hauptrahmenkonstruktion 14 kann einteilig oder mehrteilig ausgeführt sein und bspw. durch lösbar (z.B. Schraubverbindungen) und/oder unlösbar (z.B. Schweißverbindungen) verbundene Bauteile und/oder Baugruppen zusammengesetzt sein.

Der Hauptrahmenkonstruktion 14 sind zudem zur Bearbeitung der Ackerfläche entsprechende Bodenbearbeitungswerkzeuge 18, bspw. gemäß der Ausführungsbeispiele in Form einer Ackerwalze und einer Mehrzahl von Lockerungsscheiben zugeordnet.

Die Sämaschine 10 weist eine große Arbeitsbreite von bspw. 3 Meter, 6 Meter oder mehr auf. Wobei hierbei für eine Straßenfahrt seitliche Sektionen gegenüber einem Mittelteil verschwenkt werden können.

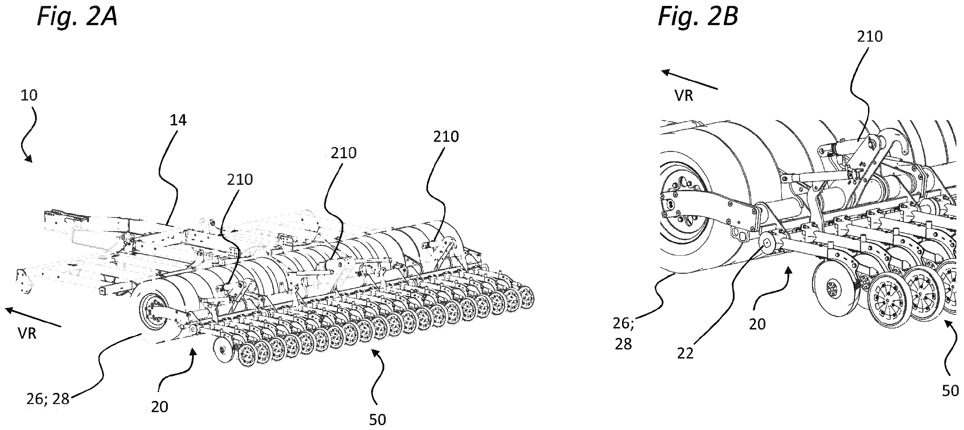

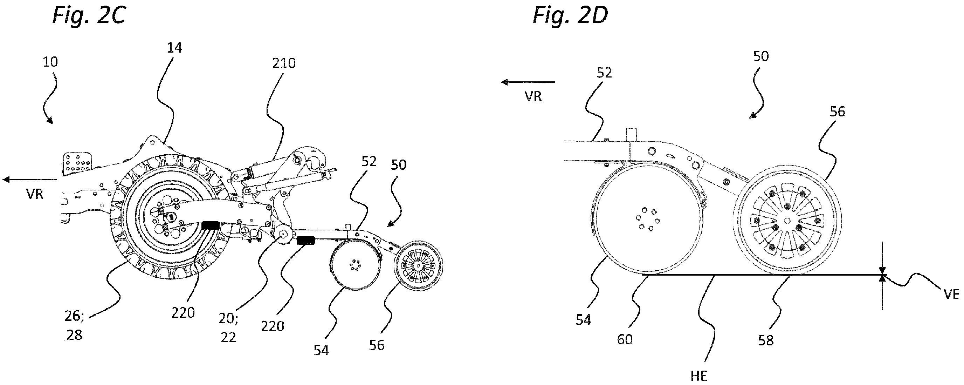

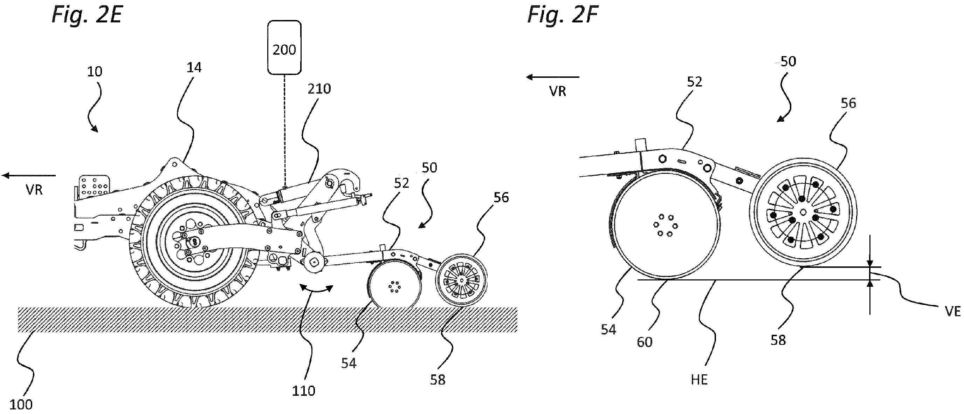

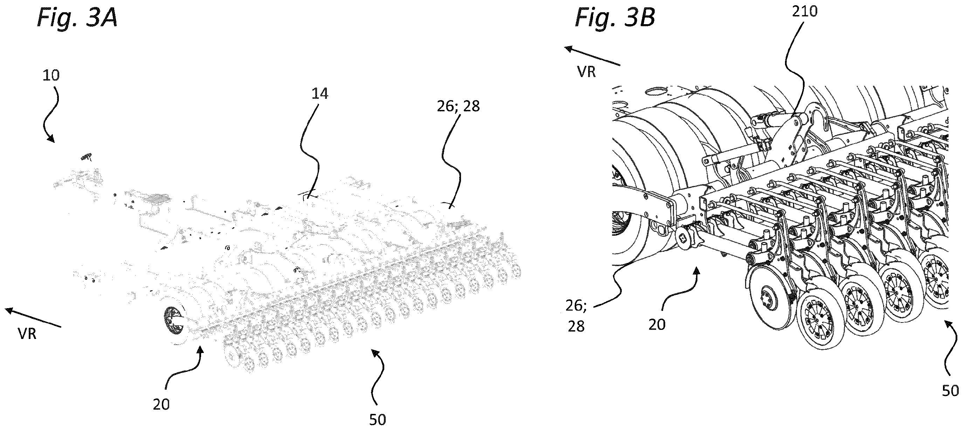

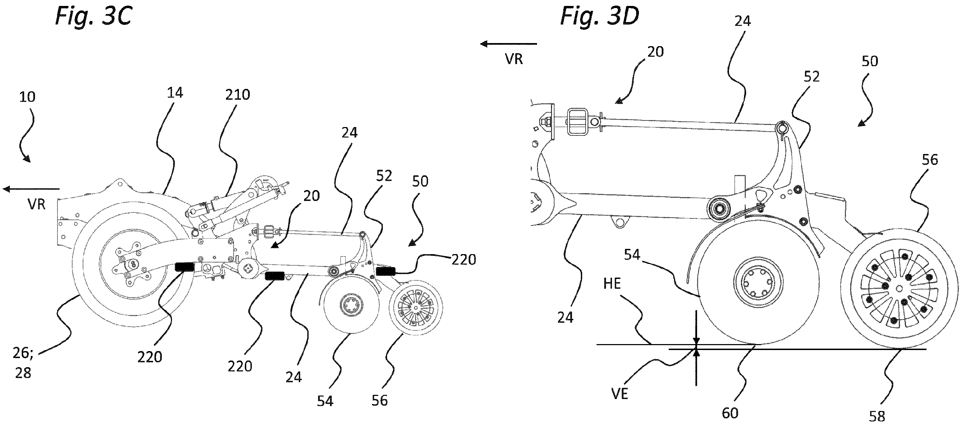

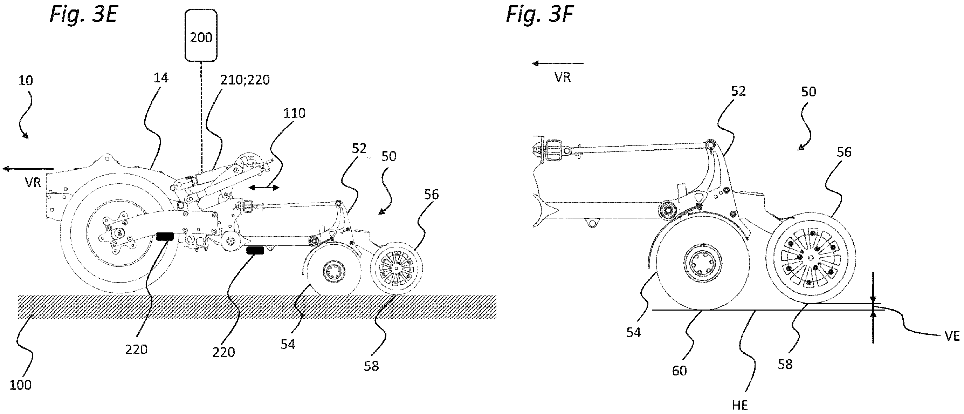

Die Figuren 2 und 3 zeigen unterschiedliche Ansichten und Ausführungsbeispiele von Sämaschinen 10 mit Säscharen 50, die unter gemeinsamer Bezugnahme auf die Figuren 2 und 3 beschrieben werden.

Die Figuren 2A und 2B sowie 3A und 3B zeigen jeweils eine Perspektivansicht einer vereinfachten Darstellung einer Sämaschine 10 mit einer Mehrzahl von Säscharen 10, sowie die Figuren 2C und 2E sowie 3C und 3E jeweils entsprechend eine Seitenansicht der Figur 2A oder 3A. Darüber hinaus zeigen die Detailansichten 2D und 2F sowie 3D und 3F jeweils unterschiedliche vertikale Abstände VE.

Gemäß der Figuren 2E und 3E bewegen sich die Packerwalze 26 und die Druckrolle 56 nahezu auf gleicher Höhe jeweils entlang einer Oberfläche der Ackerfläche 100, wohingegen die Schneidscheibe 54 zum Erzeugen der Saatfurche gegenüber der Druckrolle 56, das heißt gegenüber einem Aufstandspunkt 58 der Druckrolle 56 tiefer liegt. Wobei es auch möglich ist, dass die Druckrolle 56 tiefer als die Packerwalze 26 liegt und/oder dass auch die Druckrolle 56 und/oder die Packerwalze 26 in die Ackerfläche 100 einsinken.

Gemäß der Figuren 2 sind die Säschare 50 unmittelbar an der Scharmontagekonstruktion 20 schwenkbar gelagert, wobei hierbei die Scharmontagekonstruktion 20 zur unmittelbaren Lagerung einen Träger 22 aufweist an welchem der Scharrahmen 52 drehbar gelagert ist.

Gemäß der Figuren 3 sind die Säschare 50 mittelbar an der Scharmontagekonstruktion 20 schwenkbar gelagert, wobei hierbei die Scharmontagekonstruktion 20 zur mittelbaren Lagerung eine Parallelogrammlagerung 24 aufweist an welcher der Scharrahmen 52 beweglich gelagert ist.

Die Sämaschine 10 umfasst eine Hauptrahmenkonstruktion 14 und eine an dieser gelagerte Packerwalze 26.

An der Hauptrahmenkonstruktion ist jeweils zumindest eine Scharmontagekonstruktion 20 (gemäß der Figur 2A bspw. drei Scharmontagekonstruktionen 20) gelagert, die mittels einer Stelleinrichtung 210 (z.B. gebildet durch einen oder mehrere, einfach- oder doppeltwirkende, hydraulisch- oder pneumatisch betätigte Zylinder) in dessen Lage gegenüber der Ackerfläche 100 veränderbar ist.

An der Sämaschine ist zudem eine Sensoreinrichtung 220 vorgesehen, die eingerichtet ist, eine Lage der Scharmontagekonstruktion 20 und/oder der Säschare 50 gegenüber der Ackerfläche 100 mittelbar oder unmittelbar zu ermitteln. Die Sensoreinrichtung 220 ist hierbei bspw. durch einen oder mehrere an der Scharmontagekonstruktion 20 und/oder zumindest einem Säschar 50 und/oder der Hauptrahmenkonstruktion 14 und/oder der Stelleinrichtung angeordnete oder mit diesem gekoppelte Winkelsensoren, Kraftsensoren, Wegmesssensoren, Abstandssensoren und/oder dergl. gebildet.

Zur Bereitstellung von Stellsignalen (z.B. Steuer- und/oder Regelsignale) für die Stelleinrichtung 210 ist zudem eine Steuereinrichtung 200 vorgesehen.

Die Säschare 50 umfassen jeweils zumindest einen Scharrahmen 52, eine Schneidscheibe 54 (gemäß der Ausführungsbeispiele zwei in einem Winkel zueinander angeordnete Schneidscheiben 54 zur Bildung eines Doppelscheibenschar), die ausgelegt ist, eine Saatfurche in einer Ackerfläche 100 zu erzeugen und eine Druckrolle 56 die in Vortriebsrichtung VR der Schneidscheibe 54, zweckmäßig mit vollem Umfang , nachgeordnet und ausgelegt ist mit Druck entlang der Ackerfläche 100 abzurollen.

Der Aufstandspunkt 58 der Druckrolle 56 ist in einer Feldarbeit, d.h. gemäß der in den Ausführungsbeispielen gezeigten Position der Säschare 50, in einem vertikalen Abstand VE gegenüber einer horizontalen Ebene HE gelagert. Wobei die horizontale Ebene HE, parallel zur Vortriebsrichtung VR der Säschare 50 orientiert ist und tangential zu einem in Richtung der Ackerfläche 100 orientieren Scheitelpunkt 60 der Schneidscheibe 54 orientiert ist.

Die Säschare 50 sind jeweils derartig mittelbar (vergl. Figuren 3) oder unmittelbar (vergl. Figuren 2) an der Scharmontagekonstruktion 20 gelagert sind, dass der vertikale Abstand VE durch eine Änderung der Lage der Scharmontagekonstruktion 20 veränderbar ist (vergl. Figur 2C mit 2E oder 3C mit 3E).

Erfindungsgemäß ist vorgesehen, dass die Steuereinrichtung 200 eingerichtet ist, basierend auf der mittels der Sensoreinrichtung 220 ermittelten Lage der Scharmontagekonstruktion 20 und/oder der Säschare 50 sowie einer Sollvorgabe des vertikalen Abstand VE Stellsignale für die Stelleinrichtung 210 zur Lageänderung der Scharmontagekonstruktion 20 derartig bereitzustellen, dass der vertikale Abstand VE dauerhaft zumindest weitgehend konstant gehalten wird. Wobei der vertikale Abstand VE hierbei sowohl positiv (das heißt Aufstandspunkt 58 liegt gegenüber der Vortriebsrichtung VR höher als Scheitelpunkt 60, vergl. Figuren 2F und 3F) oder negativ (das heißt Aufstandspunkt 58 liegt gegenüber der Vortriebsrichtung VR tiefer als Scheitelpunkt 60, vergl. Figur 3D) orientiert sein kann oder wobei dieser auch 0 (das heißt Aufstandspunkt 58 und Scheitelpunkt 60 liegen gegenüber der Vortriebsrichtung VR auf gleicher Höhe, vergl. Figur 2D) sein kann.

Der Scharrahmen 52 und die Schneidscheibe 54 sind in fixierter Position zueinander mittelbar oder unmittelbar an der Scharmontagekonstruktion 20 schwenkbar gelagert. Zudem ist gemäß der Ausführungsbeispiele auch die Druckrolle 56 in fixierter und/oder fixierbarer (d.h. verstellbarer) Position am Scharrahmen 52 gelagert. Wobei es auch denkbar wäre, dass die Druckrolle höhenbeweglich, z.B. mittels einer zusätzlichen Lagerstelle, am Scharrahmen 52 gelagert ist.

Die Sensoreinrichtung 220 ist gemäß der Ausführungsbeispiele lediglich schematisch und bespielhaft dargestellt. Neben den gezeigten Positionen wären jedoch noch andere Montagepositionen für die, die Sensoreinrichtung 220 bildenden Sensoren denkbar.

Die Sensoreinrichtung 220 ist zur mittelbaren Ermittlung der sich verändernden Lage der Scharmontagekonstruktion 20 und/oder der Säschare 50 eingerichtet, wobei hierfür vorzugsweise vorgesehen sein kann, dass die Sensoreinrichtung 210 eingerichtet ist, eine Lage der Scharmontagekonstruktion 20 gegenüber der Ackerfläche 100 und/oder der Hauptrahmenkonstruktion 14 zu erfassen und/oder eine Lage zumindest eines Säschares 50 gegenüber der Ackerfläche 100 und/oder der Scharmontagekonstruktion 20 zu erfassen und/oder eine Lage der Hauptrahmenkonstruktion 14 gegenüber der Ackerfläche 100 zu erfassen. Wobei hierfür die Sensoreinrichtung 220 durch bspw. einen oder mehrere Winkelsensoren, Abstandssensoren, Lagesensoren und/oder dergl. gebildet sein kann.

Zur mittelbaren Ermittlung der sich verändernden Lage der Scharmontagekonstruktion 20 und/oder der Säschare 50 wäre es auch möglich, dass die Sensoreinrichtung 210 eingerichtet ist, eine auf die Druckrolle 56 und/oder die Schneidscheibe 54 und/oder den Scharrahmen 52 und/oder die Scharmontagekonstruktion 20 wirkende Kraft zu erfassen. Wobei hierfür die Sensoreinrichtung 220 durch bspw. einen oder mehrere Kraftsensoren, Drucksensoren und/oder dergl. gebildet sein kann.

Die Sensoreinrichtung 220 ist alternativ oder ergänzend zur unmittelbaren Ermittlung der sich verändernden Lage der Scharmontagekonstruktion 20 und/oder der Säschare 50 eingerichtet, wobei hierfür vorzugsweise vorgesehen sein kann, dass die Sensoreinrichtung 220 eingerichtet ist, eine Lage der Druckrolle 56 gegenüber der Schneidscheibe 54 zu erfassen, und/oder eine Lage des Aufstandspunkt 58 der Druckrolle 56 gegenüber dem zur Ackerfläche 100 orientierten Scheitelpunkt 60 der Schneidscheibe 54 zu erfassen und/oder eine Lage des Aufstandspunkt 58 der Druckrolle 58 gegenüber der horizontalen Ebene HE, die parallel zur Vortriebsrichtung VR der Säschare 50 orientiert ist und die tangential zu einem in Richtung der Ackerfläche orientieren Scheitelpunkt 60 der Schneidscheibe 54 ist, zu erfassen. Wobei hierfür die Sensoreinrichtung 220 durch bspw. einen oder mehrere Abstandssensoren, Lagesensoren und/oder dergl. gebildet sein kann.

Vorzugsweise ist die Sensoreinrichtung 220 eingerichtet, zur mittelbaren Ermittlung der sich verändernden Lage der Scharmontagekonstruktion 20 und/oder der Säschare 50, eine Höhenlage und/oder Winkellage und/oder Lage in Vortriebsrichtung VR der Scharmontagekonstruktion 20 gegenüber der Hauptrahmenkonstruktion 14 und/oder der Ackerfläche 100 zu ermitteln. Somit kann auf Basis einer sich verändernden Lage der Scharmontagekonstruktion 20 auf einen sich verändernden vertikalen Abstand VE rückgeschlossen werden und die Lage entsprechend angepasst werden.

Die Packerwalze 26 ist durch eine Mehrzahl von quer zur Vortriebsrichtung VR beabstandet zueinander angeordnete Packerelemente 28 (z.B. Packerräder) gebildet. Wobei den Packerelementen 28 jeweils eine identische Anzahl an Säscharen 50 nachgeordnet sind. Die Packerwalze 26 bildet vorzugsweise auch ein Fahrwerk der Sämaschine 10, so dass für eine Straßenfahrt keine separaten Fahrwerksräder benötigt werden.

Es ist möglich, dass die Sensoreinrichtung 220 zur mittelbaren Ermittlung der Lage der Scharmontagekonstruktion 20 eingerichtet ist, einen Abstand der Hauptrahmenkonstruktion 14 gegenüber der Ackerfläche 100 zwischen zwei Packerelementen 28 zu erfassen.

Es ist möglich, dass die Sensoreinrichtung 220 eingerichtet ist, den vertikalen Abstand VE mittelbar zu ermitteln, insbesondere basierend auf einer sich verändernden Höhenlage und/oder Winkellage (vergl. Figur 2) und/oder Lage in Vortriebsrichtung (vergl. Figur 3) der Scharmontagekonstruktion 20 gegenüber der Hauptrahmenkonstruktion 14 und/oder der Ackerfläche 100 zu ermitteln. Wobei die jeweilige Veränderung der Lage in den Figuren 2E und 3E schematisch durch Linien 110 dargestellt ist.

Eine Weiterbildung der Erfindung kann vorsehen, dass die Steuereinrichtung 200 eingerichtet ist, Stellsignale für die Stelleinrichtung 210 zur Lageänderung der Scharmontagekonstruktion 20 derartig bereitzustellen, dass für ein dauerhaftes zumindest weitgehendes konstant halten des vertikalen Abstands, eine Höhenlage und/oder Winkellage und/oder Lage in Vortriebsrichtung VR der Scharmontagekonstruktion 20 gegenüber der Hauptrahmenkonstruktion 14 und/oder der Ackerfläche 100 verändert oder im Wesentlichen konstant gehalten wird. Wobei die jeweilige Veränderung der Lage in den Figuren 2E und 3E schematisch durch Linien 110 dargestellt ist.

Gemäß der Ausführungsbeispiele wird somit bspw. zum Verändern der Lage der Scharmontagekonstruktion 20 und somit des vertikalen Abstand VE gemäß der Figuren 3 eine Position der Parallelogrammlagerung 24 in Vortriebsrichtung VR verändert und gemäß der Figuren 2 eine Winkellage eines Träger 22 der Scharmontagekonstruktion 20 verändert.

Die Säschare 50 sind quer zur Fahrrichtung VR gestaffelt angeordnet, das heißt dass zumindest Säschare 50 mit zwei unterschiedlichen Längen an der Scharmontagekonstruktion 20 gelagert sind, wobei die Steuereinrichtung 200 eingerichtet ist, Stellsignale für die Stelleinrichtung 210 derartig bereitzustellen, dass der vertikale Abstand VE des kurzen Säschares 50 oder des langen Säschares 50 dauerhaft zumindest weitgehend konstant gehalten wird und/oder das ein Mittelwert des vertikalen Abstand des kurzen Säschares 50 und des langen Säschares 50 dauerhaft zumindest weitgehend konstant gehalten wird.

Die Säschare 10 sind in einem Strichabstand zueinander angeordnet, das heißt in einem mittleren Abstand quer zur Vortriebsrichtung VR zueinander angeordnet, der mindestens 12,5cm beträgt und der maximal 25cm beträgt, vorzugsweise 15cm beträgt.

Insofern die Sämaschine 10 bspw. eine große Arbeitsbreite aufweist ist es möglich, dass die Sämaschine 10 zumindest zwei Scharmontagekonstruktionen 20 (gemäß der Figur 2A bspw. drei Scharmontagekonstruktionen 20) mit jeweils zumindest einer Stelleinrichtung 210 (entsprechend gemäß der Figur 2A für drei Scharmontagekonstruktionen 20 drei Stelleinrichtungen 210) umfasst, wobei es möglich ist, dass jeweils eine unterschiedliche und/oder identische Anzahl (gemäß der Figur 2A jeweils außen liegend eine identische Anzahl und innenliegend hiervon eine unterschiedliche Anzahl) an daran gelagerten Säscharen 50 mit jeweils identischen und/oder unterschiedliche vertikalen Abständen VE angebracht sind, wobei zudem auch eine entsprechende Anzahl an Sensoreinrichtungen 220 vorgesehen sein kann. Wobei es hierbei möglich ist, dass die Steuereinrichtung 200 eingerichtet ist, basierend auf der jeweils mittels der Sensoreinrichtung 220 ermittelten Lage der jeweiligen Scharmontagekonstruktion 20 und/oder der jeweiligen Säschare 50 sowie einer jeweiligen Sollvorgabe des vertikalen Abstand VE Stellsignale für die jeweilige Stelleinrichtung 210 zur Lageänderung der Scharmontagekonstruktion 20 derartig bereitzustellen, dass der jeweilige vertikale Abstand VE dauerhaft zumindest weitgehend konstant gehalten wird. Gemäß der Figur 2A wird die Stelleinrichtung 210 jeweils durch Hydraulikzylinder gebildet, welche aufgrund der unterschiedlichen Anzahlen an Säscharen 50 unterschiedliche Querschnitte aufweisen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

**Bezugszeichenliste:**

| | | | |
|---|---|---|---|
| 10 | Sämaschine | 56 | Druckrolle |
| 12 | Vorratsbehälter | 58 | Aufstandspunkt |
| 14 | Hauptrahmenkonstruktion | 60 | Scheitelpunkt |
| 16 | Verbindungseinrichtung | | |
| 18 | Bodenbearbeitungswerkzeug | 100 | Ackerfläche |
| 20 | Scharmontagekonstruktion | 110 | Linie |
| 22 | Träger | | |
| 24 | Parallelogrammlagerung | 200 | Steuereinrichtung |
| 26 | Packerwalze | 210 | Stelleinrichtung |
| 28 | Packerelement | 220 | Sensoreinrichtung |
| 50 | Säschar | VE | vertikaler Abstand |
| 52 | Scharrahmen | HE | horizontale Ebene |
| 54 | Schneidscheibe | VR | Vortriebsrichtung |

## Patentansprüche

1. Sämaschine (10) zur Ablage von landwirtschaftlichem Verteilgut auf einer Ackerfläche (100), aufweisend zumindest,
- eine Hauptrahmenkonstruktion (14) und eine an dieser gelagerte Packerwalze (26),
- eine an der Hauptrahmenkonstruktion (14) gelagerte und mittels einer Stelleinrichtung (210) in dessen Lage gegenüber der Ackerfläche (100) veränderbare Scharmontagekonstruktion (20), wobei die Stelleinrichtung (210) eingerichtet ist, basierend auf Stellsignalen Stellbewegungen zur Lageänderung der Scharmontagekonstruktion (20) auszuführen,
- eine Sensoreinrichtung (220), die eingerichtet ist, eine sich verändernde Lage der Scharmontagekonstruktion (20) und/oder der Säschare (50) gegenüber der Ackerfläche (100) mittelbar oder unmittelbar zu ermitteln,
- eine Steuereinrichtung (200), die eingerichtet ist, Stellsignale für die Stelleinrichtung (210) bereitzustellen,
- mehrere an der Scharmontagekonstruktion (20) gelagerte Säschare (50), welche Säschare (50) jeweils zumindest durch einen Scharrahmen (52), eine Schneidscheibe (54), die ausgelegt ist, eine Saatfurche in einer Ackerfläche (100) zu erzeugen und eine Druckrolle (56), die in Vortriebsrichtung (VR) der Schneidscheibe (54) nachgeordnet und ausgelegt ist mit Druck entlang der Ackerfläche (100) abzurollen, gebildet sind, wobei der Aufstandspunkt (58) der Druckrolle (56) in einer Feldarbeit einen vertikalen Abstand (VE) gegenüber einer horizontalen Ebene (HE), die parallel zur Vortriebsrichtung (VR) der Säschare (50) orientiert ist und die tangential zu einem in Richtung der Ackerfläche (100) orientieren Scheitelpunkt (60) der Schneidscheibe (54) ist, aufweist und die Säschare (50) derartig an der Scharmontagekonstruktion (20) gelagert sind, dass der vertikale Abstand (VE) durch eine Lageänderung der Scharmontagekonstruktion (20) veränderbar ist,
**dadurch gekennzeichnet, dass** die Steuereinrichtung (200) eingerichtet ist, basierend auf der mittels der Sensoreinrichtung (220) ermittelten Lage der Scharmontagekonstruktion (20) und/oder der Säschare (50) sowie einer Sollvorgabe des vertikalen Abstand (VE) Stellsignale für die Stelleinrichtung (210) zur Lageänderung der Scharmontagekonstruktion (20) derartig bereitzustellen, dass der vertikale Abstand (VE) dauerhaft zumindest weitgehend konstant gehalten wird.

2. Sämaschine (10) nach Anspruch 1, **dadurch gekennzeichnet, dass**
- der Scharrahmen (52) und die Schneidscheibe (54) in fixierter Position zueinander an der Scharmontagekonstruktion (20) schwenkbar gelagert sind, und die Druckrolle (56) in fixierter und/oder fixierbarer Position oder höhenbeweglich am Scharrahmen (52) gelagert ist und/oder
- dass die Druckrolle (56) in Vortriebsrichtung (VR) mit vollem Umfang der Schneidscheibe (54) nachgeordnet ist.

3. Sämaschine (10) nach zumindest einem der vorhergehenden Ansprüche, **dadurch gekennzeichnet, dass** die Sensoreinrichtung (220) zur mittelbaren Ermittlung der sich verändernden Lage der Scharmontagekonstruktion (20) und/oder der Säschare (50) eingerichtet ist, eine
- Lage der Scharmontagekonstruktion (20) gegenüber der Ackerfläche (100) und/oder der Hauptrahmenkonstruktion (14) zu erfassen und/oder
- Lage zumindest eines Säschares (50) gegenüber der Ackerfläche (100) und/oder der Scharmontagekonstruktion (20) zu erfassen und/oder
- Lage der Hauptrahmenkonstruktion (14) gegenüber der Ackerfläche (100) zu erfassen.

4. Sämaschine (10) nach zumindest einem der vorhergehenden Ansprüche, **dadurch gekennzeichnet, dass** die Sensoreinrichtung (220) zur unmittelbaren Ermittlung der sich verändernden Lage der Scharmontagekonstruktion (20) und/oder der Säschare (50) eingerichtet ist, eine
- Lage der Druckrolle (56) gegenüber der Schneidscheibe (54) zu erfassen, und/oder
- Lage des Aufstandspunkt (58) der Druckrolle (56) gegenüber dem zur Ackerfläche (100) orientierten Scheitelpunkt (60) der Schneidscheibe (54) zu erfassen und/oder
- Lage des Aufstandspunkt (58) der Druckrolle (56) gegenüber der horizontalen Ebene (HE), die parallel zur Vortriebsrichtung (VR) der Säschare (50) orientiert ist und die tangential zu einem in Richtung der Ackerfläche (100) orientieren Scheitelpunkt (60) der Schneidscheibe (54) ist, zu erfassen.

5. Sämaschine (10) nach zumindest einem der vorhergehenden Ansprüche, **dadurch gekennzeichnet, dass** die Sensoreinrichtung (220) zur mittelbaren Ermittlung der sich verändernden Lage der Scharmontagekonstruktion (20) und/oder der Säschare (50) eingerichtet ist, eine Höhenlage und/oder Winkellage und/oder Lage in Vortriebsrichtung (VR) der Scharmontagekonstruktion (20) gegenüber der Hauptrahmenkonstruktion (14) und/oder der Ackerfläche (100) zu ermitteln.

6. Sämaschine (10) nach zumindest einem der vorhergehenden Ansprüche, **dadurch gekennzeichnet, dass** die Packerwalze (26) durch eine Mehrzahl von quer zur Vortriebsrichtung (VR) in regelmäßigen Abständen zueinander angeordneten Packerelementen (28) gebildet ist, wobei die Sensoreinrichtung (220) zur mittelbaren Ermittlung der verändernden Lage der Scharmontagekonstruktion (20) und/oder Säschare (50) eingerichtet ist, einen Höhenabstand der Hauptrahmenkonstruktion (14) gegenüber der Ackerfläche (100) zwischen zwei Packerelementen (28) zu erfassen und/oder in Vortriebsrichtung (VR) unmittelbar vor oder hinter der Packerwalze (26) zu erfassen.

7. Sämaschine (10) nach zumindest einem der vorhergehenden Ansprüche, **dadurch gekennzeichnet, dass** die Steuereinrichtung (200) eingerichtet ist, Stellsignale für die Stelleinrichtung (210) unter Berücksichtigung geometrischer Größen der Scharmontagekonstruktion (20) und/oder des Säschares (50) bereitzustellen.

8. Sämaschine (10) nach zumindest einem der vorhergehenden Ansprüche, **dadurch gekennzeichnet, dass**
- die Säschare (50) unmittelbar an der Scharmontagekonstruktion (20) schwenkbar gelagert sind, wobei die Scharmontagekonstruktion (20) zur unmittelbaren Lagerung einen Träger (22) aufweist an welchem der Scharrahmen (52) drehbar gelagert ist,
oder
- die Säschare (50) mittelbar an der Scharmontagekonstruktion (20) schwenkbar gelagert sind, wobei die Scharmontagekonstruktion (20) zur mittelbaren Lagerung eine Parallelogrammlagerung (24) aufweist an welcher der Scharrahmen (52) beweglich gelagert ist.

9. Sämaschine (10) nach zumindest einem der vorhergehenden Ansprüche, **dadurch gekennzeichnet, dass** die Steuereinrichtung (200) eingerichtet ist, Stellsignale für die Stelleinrichtung (210) zur Lageänderung der Scharmontagekonstruktion (20) derartig bereitzustellen, dass für ein dauerhaftes zumindest weitgehendes konstant halten des vertikalen Abstands (VE) der Druck mit welchem die Druckrolle (56) entlang der Ackerfläche (100) bewegt wird erhöht, verringert oder im Wesentlichen konstant gehalten wird.

10. Sämaschine (10) nach zumindest einem der vorhergehenden Ansprüche, **dadurch gekennzeichnet, dass** die Steuereinrichtung (200) eingerichtet ist, Stellsignale für die Stelleinrichtung (210) zur Lageänderung der Scharmontagekonstruktion (20) derartig bereitzustellen, dass für ein dauerhaftes zumindest weitgehendes konstant halten des vertikalen Abstands (VE), eine Höhenlage und/oder Winkellage und/oder Lage in Vortriebsrichtung (VR) der Scharmontagekonstruktion (20) gegenüber der Hauptrahmenkonstruktion (14) und/oder der Ackerfläche (100) verändert oder im Wesentlichen konstant gehalten wird.

11. Sämaschine (10) nach zumindest einem der vorhergehenden Ansprüche, **dadurch gekennzeichnet, dass** die Steuereinrichtung (200) und/oder die Sensoreinrichtung (220) eingerichtet ist, aus Signalen der die Sensoreinrichtung (220) bildenden Sensoren, jeweils einen Mittelwert zu bilden und basierend auf dem Mittelwert eine Lage der Scharmontagekonstruktion (20) und/oder der Säschare (50) zu ermitteln.

12. Sämaschine (10) nach zumindest einem der vorhergehenden Ansprüche, **dadurch gekennzeichnet, dass** die Säschare (50) quer zur Vortriebsrichtung (VR) gestaffelt angeordnet sind und zumindest Säschare (50) mit zwei unterschiedlichen Längen an der Scharmontagekonstruktion (20) gelagert sind, wobei die Steuereinrichtung (200) eingerichtet ist, Stellsignale für die Stelleinrichtung (210) zur Lageänderung der Scharmontagekonstruktion (20) derartig bereitzustellen, dass der vertikale Abstand (VE) des kurzen Säschares (50) und/oder des langen Säschares (50) dauerhaft zumindest weitgehend konstant gehalten wird und/oder das ein Mittelwert des vertikalen Abstand (VE) des kurzen Säschares (50) und des langen Säschares (50) dauerhaft zumindest weitgehend konstant gehalten wird.

13. Sämaschine (10) nach zumindest einem der vorhergehenden Ansprüche, **dadurch gekennzeichnet, dass** die Steuereinrichtung (200) eingerichtet ist, basierend auf einer Sollvorgabe des vertikalen Abstands (VE)
- eine, eine diesem entsprechende Lage der Scharmontagekonstruktion (20) und/oder der Säschare (50) zu definieren und/oder
- diesem entsprechende, mittels der Sensoreinrichtung (220) erfasste, Lagesignale zu definieren und
- Stellsignale für die Stelleinrichtung (210) zur Lageänderung der Scharmontagekonstruktion (20) derartig bereitzustellen, dass die Lage der Scharmontagekonstruktion (20) und/oder der Säschare und/oder die mittels der Sensoreinrichtung (220) erfassten Lagesignale, insbesondere gegenüber der Hauptrahmenkonstruktion (14) und/oder der Ackerfläche (100), dauerhaft zumindest weitgehend konstant gehalten werden.

14. Verfahren zur Einstellung einer Sämaschine (10) zur Ablage von landwirtschaftlichem Verteilgut auf einer Ackerfläche (100), umfassend
- ein Bewegen von Säscharen (50) entlang einer Ackerfläche (100), wobei die Säschare (50) an einer Scharmontagekonstruktion (20) gelagert sind und die Säschare (50) zumindest einen Scharrahmen (52), eine Schneidscheibe (54) und eine Druckrolle (56) aufweisen und wobei eine Lage der Scharmontagekonstruktion (20) mittels einer Stelleinrichtung (210) veränderbar ist, welche Stelleinrichtung eingerichtet ist, basierend auf Stellsignalen Stellbewegungen auszuführen,
- ein Erzeugen einer Saatfurche in der Ackerfläche (100) mittels der zumindest einen Schneidscheibe (54) und ein Ablegen des Verteilgut in die Saatfurche, sowie anschließendes Andrücken des Verteilgut in der Saatfurche und/oder schließen der Saatfurche mittels der Druckrolle (56), wobei die Druckrolle (56) sich mit Druck entlang der Ackerfläche (100) abrollt und in einem vertikalen Abstand (VE) gegenüber einer horizontalen Ebene (HE), die parallel zur Vortriebsrichtung (VR) der Säschare (50) orientiert ist und die tangential zu einem in Richtung der Ackerfläche (100) orientieren Scheitelpunkt (60) der Schneidscheibe (54) ist, angeordnet ist,
**gekennzeichnet durch**,
- eine Kalibrierungsphase zur direkten und/oder indirekten Definition einer Sollvorgabe des vertikalen Abstands (VE),
- und eine Bereitstellung von Stellsignalen für die Stelleinrichtung (210) zur Lageänderung der Scharmontagekonstruktion (20) mittels einer Steuereinrichtung (200) basierend auf einer mittels einer Sensoreinrichtung (220) ermittelten Lage der Scharmontagekonstruktion (20) und/oder der Säschare (50) sowie der Sollvorgabe des vertikalen Abstand (VE) derartig, dass der vertikale Abstand (VE) dauerhaft zumindest weitgehend konstant gehalten wird.

15. Verfahren nach Anspruch 14, **dadurch gekennzeichnet, dass** die Steuereinrichtung (200) eingerichtet ist, in der Kalibrierungsphase basierend auf einer Sollvorgabe des vertikalen Abstands (VE)
- eine, eine diesem entsprechende Lage der Scharmontagekonstruktion (20) und/oder der Säschare (50) zu definieren und/oder
- diesem entsprechende, mittels der Sensoreinrichtung (220) erfasste, Lagesignale zu definieren und
- Stellsignale für die Stelleinrichtung (210) zur Lageänderung der Scharmontagekonstruktion (20) derartig bereitzustellen, dass die Lage der Scharmontagekonstruktion (20) und/oder der Säschare und/oder die mittels der Sensoreinrichtung (220) erfassten Lagesignale, insbesondere gegenüber der Hauptrahmenkonstruktion (14) und/oder der Ackerfläche (100), dauerhaft zumindest weitgehend konstant gehalten werden.

16. Verfahren nach zumindest einem der Verfahrensansprüche 14 oder 15 **dadurch gekennzeichnet,**
- **dass** die Kalibrierungsphase zur direkten Definition einer Sollvorgabe des vertikalen Abstands (VE) eine Nutzereingabe eines vertikalen Abstands (VE) in die Steuereinrichtung umfasst, und/oder
- **dass** die Kalibrierungsphase zur indirekten Definition einer Sollvorgabe des vertikalen Abstands (VE), eine derartige Lageänderung der Scharmontagekonstruktion (20) und/oder der Säschare (50) umfasst, dass eine gewünschte Ablagetiefe erreicht wird.
